# EUROPEAN PATENT APPLICATION

(11) **EP 4 525 282 A1**
(43) Date of publication of application: **19.03.2025**
(21) Application number: 23197618.4
(22) Date of filing: 15.09.2023
(51) Int. Cl.: H02M 1/00, H02M 1/32, H02M 3/335, H02H 7/12

(54) **HIGH VOLTAGE SIDE OVERCURRENT AND OVERVOLTAGE PROTECTION CIRCUIT**

(71) Applicant: Samsung SDI Co., Ltd., Yongin-si, Gyeonggi-do 17084 (KR)
(72) Inventor: Kurcik, Peter, 8505 St. Nikolai im Sausal (AT); Fritz, Jürgen, 8111 Gratwein-Straßengel (AT)
(74) Representative: Gulde & Partner

(57) **Abstract**

The present disclosure refers to the field of isolated high voltage, HV, DC/DC flyback switching power supplies.

In particular, the present disclosure relates to a HV side based overcurrent and overvoltage protection circuit (30) for a HV DC/DC flyback switching power supply, which is powered from the HV peaks produced by the switching of the HV DC/DC flyback switching power supply. According to one aspect of the present disclosure, the protection circuit (30) comprises a protection circuit transistor (Mprot) on the HV input side (10) of the HV DC/DC flyback switching power supply; a rectifying diode (Drect), wherein the rectifying diode (Drect) is configured for rectifying voltage peaks caused by the inductance of a primary inductor (Lp) on the HV input side (10) to power the protection circuit (30); and a sensing block (32, 34) configured to detect an electrical failure on the HV input side (10).

## Description

### Field of the Disclosure

The present disclosure relates to a high voltage side overcurrent and overvoltage protection circuit and in particular to a high voltage side overcurrent and overvoltage protection circuit for a high voltage isolated DC/DC flyback switching power supply.

### Technological Background

In the recent years, vehicles for transportation of goods and peoples have been developed using electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to give power for propulsion over sustained periods of time.

### Battery cell and battery pack architecture

A single battery cell includes an electrode assembly comprising a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected in series or in parallel. That is, the battery module is formed by interconnecting the electrode terminals of the plurality of battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage.

A battery pack is a set of any number of (for example identical) battery modules or single battery cells. The battery modules, respectively battery cells, may be configured in a series, parallel or a mixture of both to deliver the desired voltage, capacity, or power density. Components of battery packs include the individual battery modules, and the interconnects, which provide electrical conductivity between them.

A battery system further includes a battery management system (BMS), which is any electronic system that manages the rechargeable battery, battery module and battery pack, such as by protecting the batteries from operating outside their safe operating area, monitoring their states, calculating secondary data, reporting that data, controlling its environment, authenticating it and/or balancing it. For example, the BMS may monitor the state of the battery as represented by voltage (such as total voltage of the battery pack or battery modules, voltages of individual cells), temperature (such as average temperature of the battery pack or battery modules, coolant intake temperature, coolant output temperature, or temperatures of individual cells), coolant flow (such as flow rate, cooling liquid pressure), and current. Additionally, a BMS may calculate values based on the above items, such as minimum and maximum cell voltage, state of charge (SOC) or depth of discharge (DOD) to indicate the charge level of the battery, state of health (SOH; a variously-defined measurement of the remaining capacity of the battery as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. The BMS may be also distributed, wherein a BMS board is installed at each cell, with just a single communication cable between the battery and a controller. Or the BMS may be of modular construction including a few controllers, each handling a certain number of cells, with communication between the controllers. Centralized BMSs are most economical, least expandable, and are plagued by a multitude of wires. Distributed BMSs are the most expensive, simplest to install, and offer the cleanest assembly. Modular BMSs offer a compromise of the advantages and disadvantages of the other two topologies.

A BMS may protect the battery pack from operating outside its safe operating area. Operation outside the safe operating area may be indicated in case of over-current, over-voltage (during charging), over-temperature, under-temperature, over-pressure, and ground fault or leakage current detection. The BMS may prevent operation outside the battery's safe operating area by including an internal switch (such as a relay or solid-state device) which is opened if the battery is operated outside its safe operating area, requesting the devices to which the battery is connected to reduce or even terminate using the battery, and actively controlling the environment, such as heaters, fans, air conditioning or liquid cooling means.

The BMS of automotive high voltage (HV) battery systems are usually supplied from a lead acid battery of the vehicle. A typical lead acid battery comprises a positive pole (plus pole "CL30") and a negative pole (minus pole "CL31"). If the connection to the positive pole becomes unintentionally lost, there are various cases where the BMS still have to be supplied for at least a short time afterwards, for example, to store operational and safety critical data. One of the options to supply the BMS in such cases is the use of an isolated backup power supply directly powered from the HV battery pack (also called HV cellstack). For providing such a backup power supply, an isolated HV flyback switching power supply may be implemented.

Since the HV battery is able to deliver very high currents that could lead to severe damages or dangerous situations for the passengers in a vehicle, a fuse has to be integrated to protect the connection to such a backup power supply. For example, a melting fuse is typically used in the prior art.

However, especially for 800 V HV systems, melting fuses with suitable ratings for the backup power supply are not very common, particularly for applications in the automotive sector. The simultaneous requirement for a relatively high voltage rating > 1000 V in combination with a relatively low current rating of only 30-50 mA makes their selection difficult. The specified current rating is based on the power rating of the electronic of the BMS, which is usually in the range of 5 W, resulting in about 9 mA of current consumption from the HV side (considering a voltage of 750 V and 70 % switching efficiency). On the other hand, in case of a malfunction of the backup power supply (e.g., by a short-circuit), overcurrents in the range of tens to hundreds of amperes may flow. In combination with the high voltage provided by the HV cellstack, this will result in an extreme power dissipation which may lead to a permanent damage and possible circuit burnout if the power dissipation is not immediately interrupted.

Additionally, temporary overvoltage on the HV bus may damage the power supply as well and there are two ways of dealing with this problem in the prior art. Either components with a much higher voltage rating than it is required in normal operation are applied (often such components does not exist or are more expensive) or an overvoltage protection is used which only temporarily cuts the backup supply from the HV bus in case of overvoltages. A melting fuse could also be used to protect the circuit in cases where the overvoltage will otherwise cause a breakdown of the components, however, if the overvoltage events are part of the operating specification of the system, this is not an acceptable solution since the backup power supply is typically not operational after the melting fuse has been triggered by an overvoltage event, which limits the availability of the system and leads to a higher amount of required service costs in the field.

A more appropriate solution compared to a melting fuse is the use of a resettable electronic fuse with combined overcurrent and overvoltage protection. However, resettable electronic fuses specified for applications in the automotive sector and which provide the required ratings are typically quite expensive and may require a separate low-voltage (LV) power supply for their operation. Therefore, resettable electronic fuses of the prior art are again supplied from the lead acid battery or another fail-safe power supply has to be provided.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a protection circuit for a HV DC/DC flyback switching power supply comprises a protection circuit transistor in electrical series connection with a first pole of a HV cellstack, a primary inductor, a switching transistor, and a second pole of a HV cellstack on a HV input side of the HV DC/DC flyback switching power supply, wherein a gate of the switching transistor is controlled by a switching regulator connected to be powered by the HV cellstack from a power supply by means of an electrical parallel connection to the electrical series connection of the protection circuit transistor and the switching transistor, wherein the protection circuit transistor having a gate connected to a switching node providing a switching voltage of the HV input side, wherein the switching node is in the electrical series connection between the primary inductor and the switching transistor; a rectifying diode in the connection between the switching node and the gate of the protection circuit transistor, wherein the rectifying diode is configured for rectifying voltage peaks caused by the inductance of the primary inductor to power the protection circuit; and a sensing block configured to detect an electrical failure on the HV input side. The protection circuit is thus powered from the HV peaks produced by the switching of the HV DC/DC flyback switching power supply.

According to another aspect of the present disclosure, a HV DC/DC flyback switching power supply comprising the protection circuit according to the present disclosure.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic block diagram of a HV DC/DC flyback switching power supply comprising an overcurrent and overvoltage protection circuit according to an embodiment.
- Fig. 2: illustrates a schematic block diagram of a HV DC/DC flyback switching power supply comprising an overcurrent and overvoltage protection circuit according to another embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a protection circuit for a HV DC/DC flyback switching power supply comprises a protection circuit transistor in electrical series connection with a first pole of a HV cellstack, a primary inductor, a switching transistor, and a second pole of a HV cellstack on a HV input side of the HV DC/DC flyback switching power supply. For example, the HV cellstack may be configured to provide a direct current (DC) with a voltage of 800 V. The primary inductor may be part of an electromagnetic transformer including a secondary inductor on a LV output side of the HV DC/DC flyback switching power supply. The switching transistor, which may be configured to periodically interrupt the current through the primary inductor, and the protection circuit transistor are in electrical series connection, wherein both transistors may be of the same type. A gate of the switching transistor is controlled by a switching regulator connected to be powered by the HV cellstack from a power supply by means of an electrical parallel connection to the electrical series connection of the protection circuit transistor and the switching transistor. The protection circuit transistor has a gate connected to a switching node providing a switching voltage of the HV input side, wherein the switching node is in the electrical series connection between the primary inductor and the switching transistor. Therefore, the state of the protection circuit transistor is controlled by a switching voltage of the HV input side at the switching node.

The protection circuit further comprises a rectifying diode in the connection between the switching node and the gate of the protection circuit transistor, wherein the rectifying diode is configured for rectifying voltage peaks caused by the inductance of the primary inductor to power the protection circuit. Further comprised is at least one sensing block configured to detect an electrical failure on the HV input side.

In other words, the present disclosure may provide a resettable electronic fuse with combined overcurrent and overvoltage protection. This electronic fuse solution is particularly cost effective since a conventional HV transistor (e.g., an N-channel HV MOSFET) may be used to cut off the HV input to the DC/DC flyback switching power supply on the HV side and inexpensive discrete components can used to sense the overcurrent and overvoltage on specific sample positions. Since the protection circuit is on the high side (e.g., at a voltage of 800 V) it can take advantage of the high voltage peaks produced by the switching of the DC/DC flyback switching power supply, may rectifie them and can thus be fully powered by energy which is normally clamped and partially dissipated in an additional clamping circuit.

Additionally the electronic overcurrent protection solution according to the present disclosure can show at least an order of magnitude faster reaction times compared to conventional fast melting fuses, which can drastically reduce the temporary stress on the components before the circuit is interrupted.

According to one embodiment, the sensing block may comprise a current sensing block configured to measure an overcurrent on the HV input side. Specifically, an overcurrent may be caused by a short-circuit, which can be limited by a corresponding input side limiting resistor to, e.g., preferably less than 5-10 A.

Preferably, the current sensing block may comprise a low-ohmic shunt resistor connected to a comparator of the current sensing block configured to compare between a normal operating current and a current in case of a short-circuit. The measurement of currents by means of a shunt resistor is well-known in the prior art. The corresponding comparator may be configured to compare a voltage drop over the shunt resistor with a reference voltage value. An output voltage of the comparator may be used to cut off the HV input to the DC/DC flyback switching power supply when overcurrent by a short-circuit on the HV input side occurs. Comparators are also well-known in the prior art and can be readily implemented as discrete circuits.

Preferably, for cutting off the HV input to the DC/DC flyback switching power supply, the current sensing block may be configured to turn on a bistable latch. The bistable latch may pull the gate of the protection circuit transistor close to its source potential of the protection circuit transistor for an off state in case a voltage drop on the shunt resistor is sensed by the comparator of the current sensing block when overcurrent by a short-circuit on the HV input side occurs.

Preferably, an internal power supply of the current sensing block may comprise a holding capacitor that is configured to keep the latch holding the protection circuit transistor in the off state for a time to discharge an input side capacitor in an electrical parallel connection to the primary inductor and the switching transistor. The holding capacitor may thus be configured to keep the latch holding the protection circuit transistor in the off state for long enough time to discharge the input side capacitance Cin under all conditions completely.

According to another embodiment, the sensing block may comprise a voltage sensing block configured to measure an overvoltage on the HV input side. Specifically, an overvoltage may be part of the operating specification of the system. Overvoltage may occur for a limited duration of time and thus only a temporary cut off the HV input to the DC/DC flyback switching power supply may be required.

Preferably, the voltage sensing block may comprise a sensing resistor connected to a HV input side voltage reference. The sensing resistor may be connected to a comparator of the voltage sensing block configured to compare between a normal operating voltage and a voltage in case of an electrical failure on the HV input side. The measurement of voltages by means of a sensing resistor is well-known in the prior art. The corresponding comparator may be configured to compare a voltage drop over the sensing resistor with a reference voltage value. An output voltage of the comparator may be used to cut off the HV input to the DC/DC flyback switching power supply when overvoltage on the HV input side occurs. Comparators are also well-known in the prior art and can be readily implemented as discrete circuits.

Preferably, the sensing resistor may be connected to a first contact of a sensing Zener diode. When an input voltage exceeds a predefined reference threshold, the current through the sensing Zener diode may create a voltage drop on the sensing resistor, which can then be sensed by the a comparator of the voltage sensing block.

Preferably, the voltage sensing block may be configured to measure a voltage over the primary inductor and the switching transistor. In an alternative embodiment, the voltage sensing block may be configured to measure a voltage over a current sensing block, the primary inductor and the switching transistor. The latter results in that the voltage block may be sensing over a shunt resistor of a current sensing block and its own sensing resistor, resulting in two redundant overcurrent sensing blocks while the overvoltage sensing function of the voltage sensing block remains unchanged. For accomplishing the measurement, a comparator may basically be configured to compare the voltage over a sensing Zener diode versus the voltage over the primary inductor, the switching transistor and an optional current sensing block. For example, when the voltage over the primary inductor and the switching transistor is greater than the voltage over the sensing Zener diode, the comparator may detect an overvoltage.

Preferably, for cutting off the HV input to the DC/DC flyback switching power supply, the voltage sensing block may be configured to turn on a bistable latch. The bistable latch may pull the gate of the protection circuit transistor close to its source potential of the protection circuit transistor for an off state in case a voltage drop on the sensing resistor is sensed by the comparator of the voltage sensing block when overcurrent by a short-circuit on the HV input side occurs.

Preferably, an internal power supply of the voltage sensing block may comprise a holding capacitor that is configured to keep the latch holding the protection circuit transistor in the off state for a time to discharge an input side capacitor in an electrical parallel connection to the primary inductor and the switching transistor. The holding capacitor may thus be configured to keep the latch holding the protection circuit transistor in the off state for long enough time to discharge the input side capacitor completely.

Preferably, the switching regulator on the HV input side is connected to a LV output side of the HV DC/DC flyback switching power supply by an optocoupler feedback block. The optocoupler feedback block allows an effective isolation between the HV input side and the LV output side of the HV DC/DC flyback switching power supply and to provide a feedback from the LV output side to the HV input side.

According to another aspect of the present disclosure, a HV DC/DC flyback switching power supply comprises the protection circuit according to the present disclosure. The HV DC/DC flyback switching power supply has therefore a protection circuit according to the present disclosure integrated, which means that the protection circuit functions as a resettable fuse that can be fully powered from the HV peaks produced by the switching of the HV DC/DC flyback switching power supply which would otherwise be clamped and partially dissipated in an additional clamping circuit. The protection circuit of the HV DC/DC flyback switching power supply may include an overcurrent and overvoltage protection which may allow to immediately disconnect the whole circuit from the HV cellstack when an electrical failure on the HV input side occurs.

### Specific Embodiments

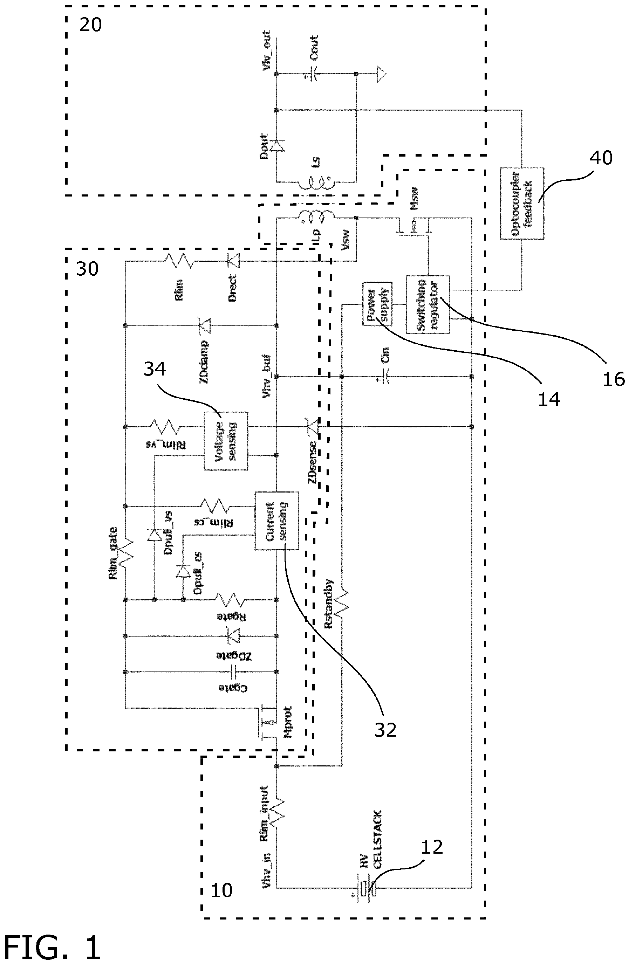

Fig. 1 illustrates a schematic block diagram of a HV DC/DC flyback switching power supply comprising an overcurrent and overvoltage protection circuit 30 according to an embodiment. The protection circuit 30 is based on a protection circuit transistor Mprot, which may be an N-channel MOSFET with a first contact connected to a positive pole of a HV cellstack 12 on a HV input side 10 of the HV DC/DC flyback switching power supply. However, more generally the protection circuit transistor Mprot may be only of the same type as a switching transistor Msw of the HV DC/DC flyback switching power supply. The whole protection circuit 30 and the gate voltage of the protection circuit transistor Mprot are supplied from a switching node providing a switching voltage Vsw, which by the nature of flyback switching supply operation contains a reflected secondary voltage and peaks caused by the inductance of a transformer of the power supply, which are above the level of a buffer HV Vhv_buf of an input side capacitor Cin being in an electrical parallel connection to a primary inductor Lp on a HV input side 10 and the switching transistor Msw. Since the potential of the buffer HV Vhv_buf essentially defines the ground potential for the HV input side 10 based protection circuit 30, this can be supplied by means of rectifying the occurring peaks by a rectifying diode Drect.

Current and voltage sensing blocks 32, 34 and the protection circuit transistor Mprot may all connected to small capacitors (not shown for current sensing, cs, and voltage sensing, vs) to store energy between the different DC/DC switching cycles of a switching regulator that controls a gate of the switching transistor Msw. Additionally, Zener diodes (e.g., sensing Zener diode ZDsense) together with a gate limiting resistor Rlim_gate, a voltage sensing limiting resistor Rlim_vs and current sensing limiting resistor Rlim_cs may be configured to provide a stabilized voltage within the current and voltage sensing blocks 32, 34 since the peaks in the switching voltage Vsw can range from tens to hundreds of volts. A clamping Zener diode ZDclamp (which is usual way of clamping the switching voltage Vsw in a HV DC/DC flyback switching power supply) may additionally clamp excessive voltage. Therefore, the protection circuit can be fully powered by the switching voltage Vsw from the high voltage peaks produced by the switching of the HV DC/DC flyback switching power supply and its parasitics.

The operation of the HV DC/DC flyback switching power supply may be triggered on demand from a LV side 20 of the HV DC/DC flyback switching power supply. When the HV DC/DC flyback switching power supply is not switching, there are no peaks to power the protection circuit 30 and to provide a gate-to-source voltage for the protection circuit transistor Mprot. The protection circuit transistor Mprot is therefore non-conductive in the shown configuration and the input capacitor Cin can be charged via a standby resistor Rstandby, which may be a high ohmic resistor in the megaohm range. While the HV DC/DC flyback switching power supply is in a standby state, the input capacitor Cin may thus be able to store enough energy to enable the HV DC/DC flyback switching power supply to startup and perform few tens of switching cycles. After the power supply is started, it may take just a few switching cycles to sufficiently charge a gate capacitor Cgate of the protection circuit transistor Mprot from the rectified switching peaks provided by the rectifying diode Drect. After that, the protection circuit transistor Mprot may become conductive and bridge across the standby resistor Rstandby, and the HV DC/DC flyback switching power supply may then operate as long as required.

The voltage sensing block 34 of the protection circuit 30 may measure a voltage on a sensing resistor (not shown) connected to the sensing Zener diode ZDsense (or a stack of them), which may provide a reference for comparison (e.g., a reference voltage of 900 V). When the input voltage exceeds a predefined reference threshold, the current through the sensing Zener diode ZDsense may create a voltage drop on the sensing resistor, which can then be sensed by a comparator circuit (not shown) of the voltage sensing block 34. This may turn on a bistable latch, which may be configured to pull the gate voltage of the protection circuit transistor Mprot close to its source potential through a voltage sensing pull diode Dpull_vs. This may immediately disable the protection circuit transistor Mprot and may thus disconnect the whole circuit from the HV cellstack 12.

After this is done, the DC/DC flyback switching power supply might further operate as there may still energy stored in the input side capacitor Cin. However, an internal power supply of the voltage sensing block 34 may comprise a holding capacitor (not shown) that will keep the latch holding the protection circuit transistor Mprot in the off state for long enough time to discharge the input side capacitor Cin completely, after which the switching of the DC/DC flyback switching power supply will cease. When the switching of the HV DC/DC flyback switching power supply stops, there is no power source anymore to enable the protection circuit transistor Mprot again.

The HV DC/DC flyback switching power supply can be restarted after the input side capacitor Cin is left again to charge via the standby resistor Rstandby. If there is still overvoltage present at this time, the operation may again cut immediately after the potential of the buffer HV Vhv_buf of the input side capacitor Cin reaches the specified overvoltage threshold.

The current sensing block 32 of the protection circuit 30 may work in similar way as the voltage sensing block 34 and measure the current through the protection circuit transistor Mprot by means of low-ohmic shunt resistor (not shown). A voltage drop over the shunt resistor may be filtered and sensed by a comparator circuit (not shown) of the current sensing block 32. The comparator circuit may take advantage from the relatively large difference between the normal operating current (e.g., in tens of mA in case of low power backup supply) and the current in case of a short-circuit which may be limited by an input side limiting resistor Rlim_input to preferably less than 5-10 A. Inexpensive and simple discrete comparator circuits may thus be used for the current sensing block 32. When the current reaches a predefined threshold value, a bistable latch may be triggered and pull the gate of the protection circuit transistor Mprot close to its source potential through a current sensing pull diode Dpull_cs. This may immediately disable the protection circuit transistor Mprot and may thus disconnect the whole circuit from the HV cellstack 12.

After this is done, the HV DC/DC flyback switching power supply might further operate as there may still energy stored in the input side capacitor Cin and it depends on the specific reason for the failure how fast the energy will be dissipated from the input side capacitor Cin (in case of a short-circuit, it may discharge immediately). However, an internal power supply of the current sensing block 32 may comprise a holding capacitor (not shown) that will keep the latch holding the protection circuit transistor Mprot in the off state for long enough time to discharge the input side capacitance Cin under all conditions completely, after which the switching of the DC/DC flyback switching power supply will cease.

The HV DC/DC flyback switching power supply can be restarted after the cause of the short-circuit has been removed. In this case, the input side capacitor Cin may again be charged via the standby resistor Rstandby. However, if there is a permanent short-circuit, there will be no attempt to start the DC/DC flyback switching power supply again.

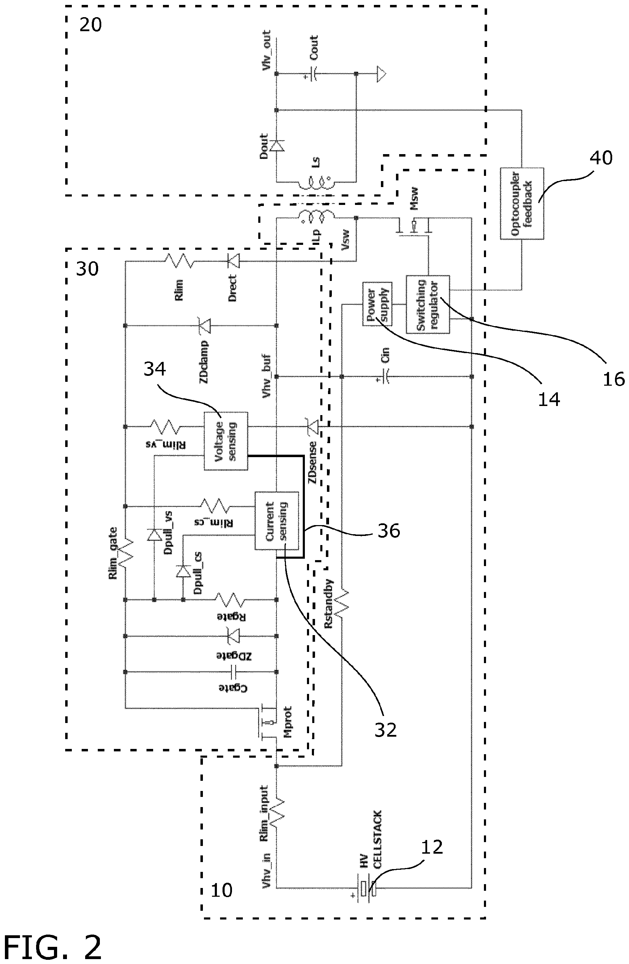

Fig. 2 illustrates a schematic block diagram of a HV DC/DC flyback switching power supply comprising an overcurrent and overvoltage protection circuit 30 according to another embodiment. The essential circuit design is identical to the circuit design of the block diagram illustrated in Fig. 1, therefore the reference signs and the related features are also essentially identical and will not be explained in detail for this figure again. Instead, only reference is made to the corresponding descriptions for Fig. 1. The illustrated embodiment differs in an alternative connection of the voltage sensing block 34 by additionally providing a voltage sensing connection 36 over both the current sensing block 32 (e.g., a corresponding overcurrent shunt resistor) and its own overvoltage sensing resistor (not shown), resulting in two redundant overcurrent sensing blocks while the overvoltage sensing function remains unchanged.

### Reference signs

- 10: HV input side (DC)
- 12: HV cellstack (HV battery pack)
- 14: Power supply
- 16: Switching regulator
- 20: LV output side (DC)
- 30: Protection circuit
- 32: Current sensing block
- 34: Voltage sensing block
- 36: Voltage sensing connection
- 40: Optocoupler feedback block

- Rlim_input: Input side limiting resistor
- Rstandby: Standby resistor
- Cin: Input side capacitor
- Msw: Switching transistor
- Lp: Primary inductor
- Ls: Secondary inductor
- Dout: Output side diode
- Cout: Output side capacitor
- Mprot: Protection circuit transistor
- Cgate: Gate capacitor
- ZDgate: Gate Zener diode
- Rgate: Gate Resistor
- Rlim_gate: Gate Limiting resistor
- Dpull_vs: Voltage sensing pull diode
- Dpull_cs: Current sensing pull diode
- Rlim_vs: Voltage sensing limiting resistor
- Rlim_cs: Current sensing limiting resistor
- ZDclamp: Clamping Zener diode
- ZDsense: Sensing Zener diode
- Rlim: Limiting resistor
- Drect: Rectifying diode
- Vhv_in: Input side HV
- Vsw: Switching voltage
- Vlv_out: Output side LV
- Vhv_buf: Buffer HV

## Claims

1. A protection circuit (30) for a high voltage, HV, DC/DC flyback switching power supply, comprising:
a protection circuit transistor (Mprot) in electrical series connection with a first pole of a HV cellstack (12), a primary inductor (Lp), a switching transistor (Msw), and a second pole of a HV cellstack (12) on a HV input side (10) of the HV DC/DC flyback switching power supply, wherein a gate of the switching transistor (Msw) is controlled by a switching regulator (16) connected to be powered by the HV cellstack (12) from a power supply (14) by means of an electrical parallel connection to the electrical series connection of the protection circuit transistor (Mprot) and the switching transistor (Msw), wherein the protection circuit transistor (Mprot) having a gate connected to a switching node providing a switching voltage (Vsw) of the HV input side (10), wherein the switching node is in the electrical series connection between the primary inductor (Lp) and the switching transistor (Msw);
a rectifying diode (Drect) in the connection between the switching node and the gate of the protection circuit transistor (Mprot), wherein the rectifying diode (Drect) is configured for rectifying voltage peaks caused by the inductance of the primary inductor (Lp) to power the protection circuit (30); and
a sensing block (32, 34) configured to detect an electrical failure on the HV input side (10).

2. The protection circuit (30) according to claim 1, wherein the sensing block (32, 34) comprises a current sensing block (32) configured to measure an overcurrent on the HV input side (10).

3. The protection circuit (30) according to claim 2, wherein the current sensing block (32) comprises a low-ohmic shunt resistor connected to a first comparator configured to compare between a normal operating current and a current in case of a short-circuit.

4. The protection circuit (30) according to claim 3, wherein the current sensing block (32) is configured to turn on a bistable latch, which pulls the gate of the protection circuit transistor (Mprot) close to its source potential of the protection circuit transistor (Mprot) for an off state in case a voltage drop on the shunt resistor is sensed by the first comparator when overcurrent by a short-circuit on the HV input side (10) occurs.

5. The protection circuit (30) according to claim 4, wherein an internal power supply of the current sensing block (32) comprises a holding capacitor that is configured to keep the latch holding the protection circuit transistor (Mprot) in the off state for a time to discharge an input side capacitor (Cin) in an electrical parallel connection to the primary inductor (Lp) and the switching transistor (Msw).

6. The protection circuit (30) according to any one of claims 2 to 5, wherein the sensing block (32, 34) comprises a voltage sensing block (34) configured to measure an overvoltage on the HV input side (10).

7. The protection circuit (30) according to claim 6, wherein the voltage sensing block (34) comprises a sensing resistor connected to a HV input side (10) voltage reference.

8. The protection circuit (30) according to claim 7, wherein the sensing resistor is connected to a first contact of a sensing Zener diode (ZDsense).

9. The protection circuit (30) according to claim 7 or 8, wherein the voltage sensing block (34) is configured to measure a voltage over the primary inductor (Lp) and the switching transistor (Msw).

10. The protection circuit (30) according to claim 7 or 8, wherein the voltage sensing block (34) is configured to measure a voltage over a current sensing block (32), the primary inductor (Lp) and the switching transistor (Msw).

11. The protection circuit (30) according to any one of claims 7 to 10, wherein the voltage sensing block (34) is configured to turn on a bistable latch, which pulls the gate of the protection circuit transistor (Mprot) close to its source potential of the protection circuit transistor (Mprot) for an off state in case a voltage drop on the sensing resistor is sensed by a second comparator when overvoltage on the HV input side (10) occurs.

12. The protection circuit (30) according to claim 11, wherein an internal power supply of the voltage sensing block (34) comprises a holding capacitor that is configured to keep the latch holding the protection circuit transistor (Mprot) in the off state for a time to discharge an input side capacitor (Cin) in an electrical parallel connection to the primary inductor (Lp) and the switching transistor (Msw).

13. The protection circuit (30) according to any one of the preceding claims, wherein the switching regulator (16) on the HV input side (10) is connected to a LV output side (20) of the HV DC/DC flyback switching power supply by an optocoupler feedback block (40).

14. The protection circuit (30) according to any one of the preceding claims, wherein the protection circuit transistor (Mprot) is a N-channel HV MOSFET.

15. A high voltage, HV, isolated DC/DC flyback switching power supply comprising the protection circuit (30) according to any one of the preceding claims.

## Amended claims

### Amended claims in accordance with Rule 137(2) EPC.

1. A protection circuit (30) for a high voltage, HV, DC/DC flyback switching power supply, comprising:
a protection circuit transistor (Mprot) in electrical series connection with a first pole of a HV cellstack (12), a primary inductor (Lp), a switching transistor (Msw), and a second pole of a HV cellstack (12) on a HV input side (10) of the HV DC/DC flyback switching power supply, wherein a gate of the switching transistor (Msw) is controlled by a switching regulator (16) connected to be powered by the HV cellstack (12) from a power supply (14) by means of an electrical parallel connection to the electrical series connection of the protection circuit transistor (Mprot) and the switching transistor (Msw), wherein the protection circuit transistor (Mprot) having a gate connected to a switching node providing a switching voltage (Vsw) of the HV input side (10), wherein the switching node is in the electrical series connection between the primary inductor (Lp) and the switching transistor (Msw);
an input side capacitor (Cin) in an electrical parallel connection to the primary inductor (Lp) and the switching transistor (Msw), wherein the input side capacitor (Cin) is charged from the HV cellstack (12) via a standby resistor (Rstandby) when the protection circuit transistor (Mprot) is in an off state; and
a sensing block (32, 34) configured to detect an electrical failure on the HV input side (10);
**characterized in that**
the protection circuit (30) further includes a rectifying diode (Drect) in the connection between the switching node and the gate of the protection circuit transistor (Mprot), wherein the rectifying diode (Drect) is configured for rectifying voltage peaks caused by the inductance of the primary inductor (Lp) to power the protection circuit (30).

2. The protection circuit (30) according to claim 1, wherein the sensing block (32, 34) comprises a current sensing block (32) configured to measure an overcurrent on the HV input side (10).

3. The protection circuit (30) according to claim 2, wherein the current sensing block (32) comprises a low-ohmic shunt resistor connected to a first comparator configured to compare between a normal operating current and a current in case of a short-circuit.

4. The protection circuit (30) according to claim 3, wherein the current sensing block (32) is configured to turn on a bistable latch, which pulls the gate of the protection circuit transistor (Mprot) close to its source potential of the protection circuit transistor (Mprot) for an off state in case a voltage drop on the shunt resistor is sensed by the first comparator when overcurrent by a short-circuit on the HV input side (10) occurs.

5. The protection circuit (30) according to claim 4, wherein an internal power supply of the current sensing block (32) comprises a holding capacitor that is configured to keep the latch holding the protection circuit transistor (Mprot) in the off state for a time to discharge the input side capacitor (Cin).

6. The protection circuit (30) according to any one of claims 2 to 5, wherein the sensing block (32, 34) comprises a voltage sensing block (34) configured to measure an overvoltage on the HV input side (10).

7. The protection circuit (30) according to claim 6, wherein the voltage sensing block (34) comprises a sensing resistor connected to a HV input side (10) voltage reference.

8. The protection circuit (30) according to claim 7, wherein the sensing resistor is connected to a first contact of a sensing Zener diode (ZDsense).

9. The protection circuit (30) according to claim 7 or 8, wherein the voltage sensing block (34) is configured to measure a voltage over the primary inductor (Lp) and the switching transistor (Msw).

10. The protection circuit (30) according to claim 7 or 8, wherein the voltage sensing block (34) is configured to measure a voltage over a current sensing block (32), the primary inductor (Lp) and the switching transistor (Msw).

11. The protection circuit (30) according to any one of claims 7 to 10, wherein the voltage sensing block (34) is configured to turn on a bistable latch, which pulls the gate of the protection circuit transistor (Mprot) close to its source potential of the protection circuit transistor (Mprot) for an off state in case a voltage drop on the sensing resistor is sensed by a second comparator when overvoltage on the HV input side (10) occurs.

12. The protection circuit (30) according to claim 11, wherein an internal power supply of the voltage sensing block (34) comprises a holding capacitor that is configured to keep the latch holding the protection circuit transistor (Mprot) in the off state for a time to discharge the input side capacitor (Cin).

13. The protection circuit (30) according to any one of the preceding claims, wherein the switching regulator (16) on the HV input side (10) is connected to a LV output side (20) of the HV DC/DC flyback switching power supply by an optocoupler feedback block (40).

14. The protection circuit (30) according to any one of the preceding claims, wherein the protection circuit transistor (Mprot) is a N-channel HV MOSFET.

15. A high voltage, HV, isolated DC/DC flyback switching power supply comprising the protection circuit (30) according to any one of the preceding claims.
